# EUROPEAN PATENT APPLICATION

(11) **EP 1 906 009 A1**
(43) Date of publication of application: **02.04.2008**
(21) Application number: 05754000.7
(22) Date of filing: 20.06.2005
(51) Int. Cl.: F02P 19/00, F02B 75/34

(54) **GASOLINE CONVERSION SYSTEM FOR INTERNAL COMBUSTION ENGINES THAT OPERATE WITH FUELS BASED ON METHANOL AND OIL**

(71) Applicant: Rocca Gonzalez, Jorge H., 59-24, Bogota (CO)
(72) Inventor: Rocca Gonzalez, Jorge H., 59-24, Bogota (CO)
(74) Representative: Bardini, Marco Luigi
(86) International application number: PCT/IB2005/001735
(87) International publication number: WO 2006/136869

(57) **Abstract**

The invention relates to a conversion system for engines that use mixtures of fuels based on methanol, which enables said engines to be operated with a mixture of oil for two-stroke engines and gasoline. The conversion is performed by a system using an intelligent device which, in accordance with the engine operating parameters, adapts the situation such that the fuel (gasoline) in the engines is or is not ignited.

## Description

### Background

Many small internal combustion engines fitted with glow plug and fed with fuel mixtures based on methanol, Nitro-methane and lubricating oils, are operated through a Glow Plug, which helps the initial ignition of the semi-diesel fuel.

These small engines for automotive applications with semi-diesel internal combustion and positive movement generated by the crank, crankshaft and piston mechanism of the vast majority of engines working with two or four stroke cycle and where the combustion process is initiated at the end of the compression process using a glow plug, in other words, by the incandescence of the plug and not by a spark "spark plug" generated by high-voltage arc as in the case of engines using gasoline as fuel.

The great majority of industrial and automotive engines works and control the ignition with a mechanical or electronic system that controls the ignition time of the spark (spark plug). These engines are not semi-diesel as ignition is not achieved spontaneously with the compression but with the electric spark generated at the spark plug to ignite the fuel mixture.

The semi-diesel engine working with fuel based on methanol and a high percentage of lubricating oil (Ricino or synthetic equivalent) mixture holds the combustion spontaneously with the compression once initiated by the heating of the plug filament with the help of a certain electrical current. After ignition, the combustion is maintained spontaneously with the compression as indicated above. The engine shutdown is done by air or fuel power outage, unlike the spark ignition engines where they shutdown by electrical current power outage to the high voltage ignition system.

When changing to a fuel different than methanol, for example automotive gasoline with lubricant for two-stroke engine, in the semi-diesel engines combustion does not occurs spontaneously, and if so, it is unstable and the engine shuts down once ignited in the conventional way.

These semi-diesel engines have disadvantages due to methanol-based fuel consumption is more expensive than gasoline and generates much more pollution with heavy solids that get the engine itself dirty. The methanol-based fuel is heavier, has greatest difficulties in terms of its storage and also is much more expensive.

### Summary of the Invention

In order to solve the above drawbacks, the present invention provides a conversion system which has a intelligent device to ensure the use of the same engine using not a methanol and oil based fuel (approximately 15% to 20%), but a common fuel such as gasoline used in the industrial and the automotive sector, mixed with a small percentage of oil (approximately 2% to 3%).

Another object of the present invention is therefore to provide a conversion system which has an intelligent device that will substantially reduce fuel costs, facilitate the acquisition of fuel because its components to make the mix: gasoline and lubricating oil, can be supplied by any service station (petrol pump).

Another object of the present invention is therefore to provide a conversion system which has an intelligent device to prevent problems on the ground that in some countries, the use of methanol is controlled and restricted by the state.

Another object of the present invention is therefore to provide a conversion system which has an intelligent device that minimizes the need for storing reserves of explosive, volatile, incendiary, poisonous and pollute fuels, just because due to the easiness to obtain the fuel that is used, does not require large fuel reserves by the distributors or the end users.

Another object of the present invention is therefore to provide a conversion system which has an intelligent device that will give, for the same autonomy, a lighter weight in fuel, near to the half, and a smaller fuel tank as the automotive fuel has a larger energetic density than methanol.

For the above reason, the system of the present invention achieves a greater autonomy that the current with the same equipment, or use the additional capacity for other accessories or functions.

Another object of the present invention is therefore to provide a conversion system which has an intelligent device to obtain reduction on labour costs and degreasing detergents required for the maintenance of vehicles by minimizing the amount of crude oil expelled by the exhaust. This can cause discomfort when driving, high risk of contamination, deterioration of the exposed surfaces and possible infiltrations and splashing of accessories or delicate devices.

Another object of the present invention is therefore to provide a conversion system which runs an intelligent that, by not using Spark plugs, does not require high-voltage circuits and electromagnetic emissions are not produced that can interfere with electronic systems in its proximity, especially with the control system of the equipment in which the engine is being used.

Another object of the present invention is therefore to provide a conversion system which has an intelligent device that achieves a lower value of investment compared to existent conversion systems that use spark plugs and high-voltage circuits.

### Brief description of the drawings

Figure 1 is a block diagram illustrating the conversion system of the present invention.
Figure 2 is a block diagram of the intelligent device that achieves the conversion and control of the engine performance.

### Detailed Description

The present invention provides a gasoline conversion system for internal combustion engines which operate with fuels based with methanol and a high percentage of lubricating oil.

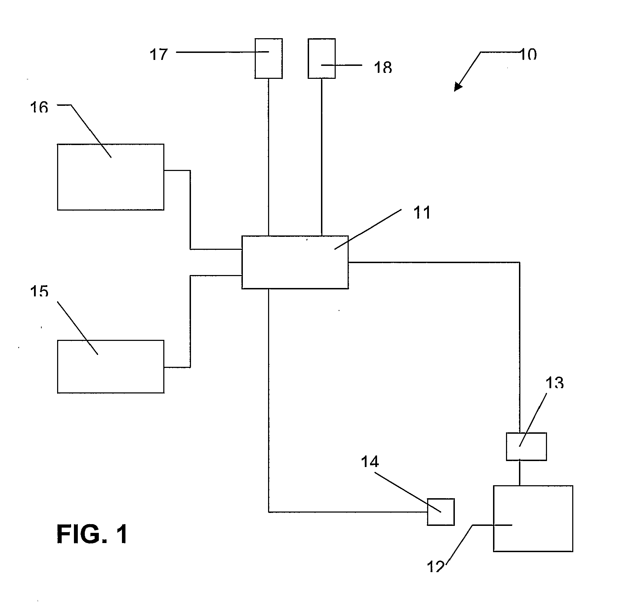

To start the description of the system of this application we refer initially to Figure 1, which shows a block diagram that explains the system 10 of the present invention.

The system 10 of Figure 1 includes an engine means 12, usually, a conventional driving machine with internal combustion of semi-diesel type of two or four strokes operated conventionally through the supply from a fuel tank 19 of a fuel generally based on a mixture of alcohol and lubricating oils whose ignition begins at the end of the compression process of an ignition means 13. Such ignition means 13 is for example a device of incandescent filament known as "Glow Plug" that is activated with the pass of an electrical current.

As mentioned before, due to the problems and disadvantages associated with the use of that oil and methanol based fuel, the present invention achieves to replace such fuel in the fuel tank 19 by another such as the one used for internal combustion engines where the air-fuel mixture is ignited by an electrical spark caused by a high voltage circuit. This fuel is for example ordinary gasoline mixed with oil for two-stroke engine. To achieve ignition of the new fuel to move the engine 12 using the ignition means 13, the system 10 of the present invention additionally includes an intelligent device 11 which is an electronic device activated by a sensor means 14 that acts by emission and reception of electromagnetic waves to establish data on the spin of the engine means 12.

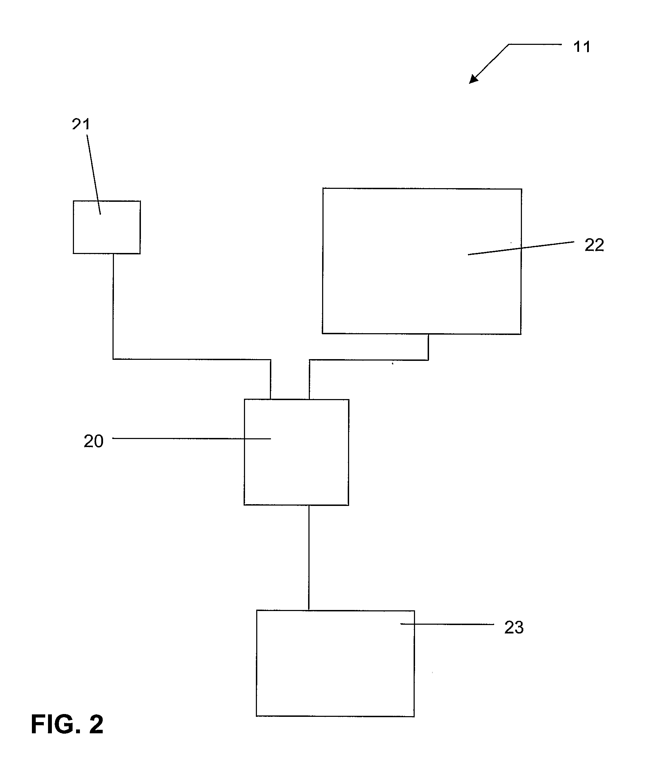

This intelligent device 11 illustrated in Figure 2 as a block diagram which represents the major functional circuits to establish proper performance of this device 12.As can be seen in Figure 2, the device 11 consists mainly of a data processor means 20 which processes the information that receives to organize the operation of the engine 12, such data processor means is preferably a microprocessor means or circuit of control of the supply of high current 23 which enables or inhibits the supply of current to the ignition means 13 according to the instruction generated by the processor means 20, an interface means or circuit of output input 22 to send to or receive from the sensor means 14 the information relative to the spin speed of the engine means 12 at request of the processor means 20, according to this data the processor means 20 generates the appropriate instructions means for the supply control of high current 23, a circuit of options 24 in which you can make variations as needed to determine four different modes of operation, this circuit 24 has in its structure one or more movable connections or "jumpers" that by be physically moved allow a different performance of the intelligent device 11 providing modes of operation. In particular, and as an illustrative example by changing the movable connections or "jumpers" the user can select the use of the driving means 12 in low (off), or high (On) revolutions per minute, or when there are emergency situations like low voltage conditions in the power supply means 15, it allows to disable (off) or enable (On) the power saving mode of the circuit and the notice option of the situation by the shutdown of the driving means 12 as discussed later.

Finally, it includes ways to restart and provide indication of operation 21, this circuit allows to, externally, restart the circuit operation, and through an indicator light it is indicated to the user the existent activity in the feeding circuit of the ignition means 13. This indicator light can be for example, a light emitting diode or LED. These ways to restart can be configured by, for example and without limiting the scope of the present invention, a switch to reboot the operation of the processor means 20.

Returning to Figure 1, that sensor means 14 is preferably a sensor that comprises three elements acting to deliver information related to the spin speed of the driving means 12. These three elements are: (i) a transmitter which emits an electromagnetic radiation such as infrared radiation, without being limited to a specific wavelength or magnetic mechanism, which targets a rotary part engine means 12,(ii) an element which has a reflective surface that is located in that rotary part of the engine means 12 which at the moment of dealing with the transmitter reflects the electromagnetic radiation and sends it to the third element, (iii) a third detector element which detects the reflected waves every time that the rotary part of the engine means 12 achieves a full revolution and sends this information to the intelligent device 11.

The electric power necessary for the intelligent device as for other vehicle controls that uses the engine means 12 is supplied by a first power source means of low potency 15 and the energy required for the operation of the ignition means 13 is supplied by a second power source means 16. The first source means 15 can be for example a rechargeable battery or not of low potency. Preferably a battery that delivers a power supply of about 30mA. The second source means 16 can be for example a rechargeable battery or not of 2.4V and 1000mA/h. Of course, those versed in the art may consider other values of potency depending on the autonomy needed to manage the driving means 12.

### Modes of Operation

The conversion system of the present invention behaves differently depending on the mode of operation in which they are located. In general the system of the present invention can operate in four essential modes of operation. These are (i) a start mode (ii) a normal operation mode, (iii) a turn off mode, (iv) and a drop in voltage mode. Each of these modes in relation to the intelligent electronic device 11 is explained below.

### (i) Start Mode

During the ignition phase, the operator connects the current to the various circuits to start the engine operation 12; once the system 10 has been energized, the intelligent device sends a peak flow of current to the plug for the initial ignition process, and keeps it this way until the engine begins its normal operation. This is, to start the engine, the incandescence current will be applied, between 1.2 and 1.5 volts, usually supplied by a voltage source 16, which generates a current supply of 4 to 6 amps to the ignition means 13.

The starting mode can also be switched on initiating the restart means 21 from the intelligent device 11 that restarts the processor operation 20.

If the engine does not spin for a predetermined time, the processor then disconnects the current source from the plug and in order to restart the operation it is required to activate again the restart means 21 in the intelligent device 11.

### (ii) Normal Operation Mode

Once the engine is running, the processor receives from the sensor means 14 the information on the spinning state of the driving means 12 determining its speed; this is processed through a heuristic algorithm that converts the information to the power required for such speed and is supplied to the plug to regulate the engine performance. Energy consumption is inversely related to the engine revolutions, and in normal operation is much moderated.

The signal of the engine spin frequency 12, which is obtained by the sensor means 14 is sent to the processor means 20 which takes the time of every spin of the engine and is processed through an appropriate software to get as an output that instructs the high current control circuit 23 how much current must provide to ensure accurate temperature for operation of the ignition means 13 so as to sustain combustion and that the driving means 12 works normally.

The software embedded within the intelligent device 11 calculate, in this way, the needed current to be given to the ignition means or the amount of electrical current needed, and that is delivered from a source means 16 for that purpose through the circuit 23 of the intelligent device 11, the supplied current is made to vary in inverse relation to the spin data of the driving means 12 obtained by the sensor means 14, thus providing the proper and needed temperature for combustion to occur at the end of the compression process of the driving means 12.

After starting the engine, the current is regulated automatically by an intelligent electronic device 11, between 2 and 0.5 amps or less, being the lowest consumption when the driving means 12 is operating at full spin speed. Failure to properly regulate this current, there would be an excessive consumption of batteries that would drain them quickly or the engine would shutdown when it is used as fuel a mixture of gasoline and oil used in the automotive area.

### (iii) Turn off mode

Once the engine is shut down, either by a direct command or for any eventuality, the processor means 20 monitors the spin speed of the driving means 12 during a predefined time interval through the sensor means 14, and if this interval time expires without being detected any movement, power supply is suspended to ignition means 13, inhibiting the high current supply control circuit 23 of the intelligent device 11.

### (iv) Voltage drop mode

If the voltage of the power source 15 falls below a certain value, the user can be in a critical situation by the lack of energy to activate the control functions in the manner in which the driving means 12 is being used. Although energy consumption of the processor circuit is quite low, the low voltage situation could become very critical; for this reason, to detect a voltage drop below the pre-established limit, the processor means 20 has the option of continuing in normal mode or to enter a saving mode.

When it is entered to this mode, at the moment the situation is detected, the processor means 20 instructs the control circuit 23 to completely stop the current supply to the ignition means causing the shutdown of the driving means (which could warn the user about the depletion of the energy source means 15), and enters into saving mode to allow the use of such means 15 to provide the remaining power in it, in other emergency functions that the user may require. The selection of this feature is done by intervening the options circuit 24 changing physically the connections moving one of their movable contacts, "jumper" 2, to closed position.

The above description has been made on the basis of a preferred mode of the invention, which is not intended to limit the invention but to explain the principles of the same. The scope of the invention, including their equivalents, is defined in the appended claims.

## Claims

1. A conversion system for internal combustion engines machines, the system comprises:
engine means that operates with a first type of fuel and that is object of the conversion to be used with a second different fuel
ignition means that is controlled to activate such engine means in a proper and reliable manner with the use of a different fuel,
an intelligent device for controlling such ignition means and other features of the system,
sensor means to detect at least an operation data of the engine means,
a first energy source means,
a second energy source means,
where through proper software can control the operation of the engine means through one or more modes or methods of operation of the system.

2. The conversion system of claim 1, where the engine means is an internal combustion engine of semi-diesel type of two or four strokes.

3. The conversion system of any of the preceding claims, where the engine means is converted from using the first fuel to use the second fuel and where the first fuel is a mixture of methanol, Nitro-methane and lubricating oils and the second fuel a mixture of gasoline and oil for two strokes.

4. The conversion system of any of the preceding claims, where such ignition means includes a plug of incandescent type.

5. The conversion system according to any of the preceding claims, where such intelligent device contains processor instructions capable of capturing data values of the driving means operation, and based on these calculate an output that controls the performance and operation of the driving means.

6. The conversion system according to any of the preceding claims, where such sensor means to detect at least one data from the operation of such driving means is a device that includes three elements that interact to deliver information related to one or more data from the operation of the driving means, (i) a transmitter which emits an electromagnetic radiation such as infrared radiation, without being limited to a specific wavelength or magnetic mechanism, which targets a part of the rotary part engine means, (ii) an element which consists of a reflective surface which is located in such rotary part of the engine which at the moment of dealing with the transmitter reflects the electromagnetic radiation and sends it to the third element, (iii) a third detector element which detects the reflected waves every time that the rotary part of the engine means achieves a full revolution and sends this information to the intelligent device.

7. The conversion system according to any of the preceding claims, where in the first power source means is a rechargeable battery or not of low potency, preferably a battery that delivers a supply of about 30 mA.

8. The conversion system according to any of the preceding claims, in the second source means is a rechargeable battery or not of high potency, preferably a rechargeable battery or not up to 2.4V and 1000mA/h or more.

9. The conversion system according to any of the preceding claims, where these modes or methods of operation of the driving means are (i) a method of ignition, (ii) a normal mode, (iii) a way off, and (iv) a drop in voltage.

10. The conversion system according to any of claims 1 or 9, where the ignition mode comprises the following steps:
connect the flow to the various circuits to start operation of the driving means during ignition phase
send through the intelligent device a peak flow of the current to the ignition means to allow the process of initial ignition,
to maintain that peak until the normal operation of such driving means,
in case of failure of ignition when a predetermined time has passed then reboot activating such means to restart the intelligent device.

11. The conversion system according to claim 10, where such means to restart are a circuit activated by a mechanical clicker.

12. The conversion system according to any of the claims on the 1 o 9, where the normal mode comprises the following steps:
once the engine is running, to receive information from sensor means in the processor the information on the spin state of the driving means,
determine the spin speed,
through a heuristic algorithm to convert the information to the power required for such engine speed,
supplying such power to the plug for regulating the operation of the engine,
regulate automatically the current by using the intelligent electronic device between 2 and 0.5 amps or less, being the lowest consumption when driving means is running at full speed.

13. The conversion system according to any of claims 1 or 9, where such shutdown mode comprises the following steps:
stop the engine by means of a direct command or for any eventuality
capturing spin information from the driving means using the sensor means
monitor such information in the processor means during a predefined time interval
suspend the power supply to the ignition means if such time interval expires without movement being detected.

14. The conversion system according to any of claims 1 or 9, where such mode voltage drop comprises the following steps:
detect a voltage drop below a preset limit,
determine in the intelligent processor if continuing on with the option of normal operation or entering the option of saving energy mode,

15. The conversion system according to claim 14, where such power saving mode additionally includes stages of:
enter the power saving mode,
instruct by means of the processor to the control circuit to completely stop the supply of power to the ignition, causing the shutdown of the driving means,
allow the use of such means of power source to supply the power remaining in this, in other emergency functions that the user may require.

16. The conversion system according to claim 15, where
the choice of saving mode is done by intervening the options circuit changing physically the connections, moving one of their movable contacts, to the closed position.

17. One method to carry out the conversion for internal combustion engine machines, the system comprises:
converting an engine means operating with a first type of fuel to be used with a second type of fuel,
controlling an ignition means to operate such engine means in a reliably and proper manner with the use of different fuel and other features through an intelligent device,
detect at least one operation data from the engine means by a sensor means
power supply using a first energy supply source,
power supply using a second energy supply source
where through proper software can control the operation of the engine means through one or more modes or methods of operation of the system.

18. The conversion system of claim 17, where the engine means is an internal combustion engine of semi-diesel type of two or four strokes.

19. The conversion system of any of the claims 17 to 18, where the engine means is converted from using the first fuel to use the second fuel and where the first fuel is a mixture of methanol, Nitro-methane and lubricating oils and the second fuel a mixture of gasoline and oil for two strokes.

20. The conversion system of any of the claims 17 to 19, where such ignition means includes a plug of incandescent type.

21. The conversion system according to any of the claims 17 to 20, where such intelligent device contains processor instructions capable of capturing data values of the driving means operation, and based on these calculate an output that controls the performance and operation of the driving means.

22. The conversion system according to any of the claims 17 to 21, where such sensor means to detect at least one data from the operation of such driving means is a device that includes three elements that interact to deliver information related to one or more data from the operation of the driving means, (i) a transmitter which emits an electromagnetic radiation such as infrared radiation, without being limited to a specific wavelength or magnetic mechanism, which targets a part of the rotary part engine means, (ii) an element which consists of a reflective surface which is located in such rotary part of the engine which at the moment of dealing with the transmitter reflects the electromagnetic radiation and sends it to the third element, (iii) a third detector element which detects the reflected waves every time that the rotary part of the engine means achieves a full revolution and sends this information to the intelligent device.

23. The conversion system according to any of the claims 17 to 22, where in the first power source means is a rechargeable battery or not of low potency, preferably a battery that delivers a supply of about 30 mA.

24. The conversion system according to any of the claims 17 to 23, in the second source means is a rechargeable battery or not of high potency, preferably a rechargeable battery or not up to 2.4V and 1000mA/h or more.

25. The conversion system according to any of the claims 17 to 24, where these modes or methods of operation of the driving means are (i) a method of ignition, (ii) a normal mode, (iii) a turn off mode, and (iv) a drop in voltage mode.

26. The conversion system according to any of claims 17 to 25, where the ignition mode comprises the following steps:
connect the flow to the various circuits to start operation of the driving means during ignition phase
send through the intelligent device a peak flow of the current to the ignition means to allow the process of initial ignition,
to maintain that peak until the normal operation of such driving means,
in case of failure of ignition when a predetermined time has passed then reboot activating such means to restart the intelligent device.

27. The conversion system according to claim 26, where such means to restart are a circuit activated by a mechanical clicker.

28. The conversion system according to any of the claims 17 to 25, where the normal mode comprises the following steps:
once the engine is running, to receive information from sensor means in the processor the information on the spin state of the driving means,
determine the spin speed,
through a heuristic algorithm to convert the information to the power required for such engine speed,
supplying such power to the plug for regulating the operation of the engine,
regulate automatically the current by using the intelligent electronic device between 2 and 0.5 amps or less, being the lowest consumption when driving means is running at full speed.

29. The conversion system according to any of the claims 17 to 25, where such shutdown mode comprises the following steps:
stop the engine by means of a direct command or for any eventuality
capturing spin information from the driving means using the sensor means,
monitor such information in the processor means during a predefined time interval,
suspend the power supply to the ignition means if such time interval expires without movement being detected.

30. The conversion system according to any of the claims 17 to 25, where such voltage drop mode comprises the following steps:
detect a voltage drop below a preset limit,
determine in the intelligent processor if continuing on with the option of normal operation or entering the option of saving energy mode.

31. The conversion system according to claim 30, where such power saving mode additionally includes stages of:
enter the power saving mode,
instruct by means of the processor to the control circuit to completely stop the supply of power to the ignition, causing the shutdown of the driving means,
allow the use of such means of power source to supply the power remaining in this, in other emergency functions that the user may require.

32. The conversion system according to claim 31, where
the choice of saving mode is done by intervening the options circuit changing physically the connections, moving one of their movable contacts, to the closed position.

33. An intelligent device to be used in a conversion system, where such intelligent device includes,
a data processor means which processes the information it receives to organize the operation of the driving means,
a means or circuit of supply control of high current which enables or inhibits the supply of current to the ignition means according to the instruction generated by processor means
an interface means or circuit of output input to send to or receive from the sensor means the information relative to the spin speed of the engine means at request of the processor means, according to this data the processor means generates the proper instructions for the means of supply control of high current
a circuit of options in which you can make variations as needed to determine four different modes of operation, such circuit has in its structure one or more movable connections or "jumpers" that by being physically moved allow a different performance of the intelligent device providing modes of operation
ways to restart and provide indication of operation, this circuit allows to, externally, restart the circuit operation, and through an indicator light it is indicated to the user the existent activity in the feeding circuit of the ignition means

34. The intelligent device from the claim 33, where such processor means is a microprocessor

35. The intelligent device of any of the claims 33 to 34, where by changing the movable connections or "jumpers" the user can select the use of the driving means in low (off), or high (On) revolutions per minute, or when there are emergency situations like low voltage conditions in the power supply means, it allows to disable (off) or enable (On) the power saving mode of the circuit and the notice option of the situation by the shutdown of the driving means.

36. The intelligent device of any of the claims 33 to 35, in which such indicator light can between others a light emitting diode or LED and the means to restart are a switch.
